# EUROPEAN PATENT SPECIFICATION

(11) **EP 1 209 615 B1**
(45) Date of publication and mention of the grant of the patent: **02.07.2008**
(21) Application number: 01126317.5
(22) Date of filing: 06.11.2001
(51) Int. Cl.: G06K 19/00, G06K 19/07, G06K 7/00, G08G 1/017, G01S 13/02, G07B 15/00, G07C 9/00

(54) **Dual band transponder system**
Doppelbandiges Transpondersystem
Système de répondeur en double bande

(30) Priority: 06.11.2000 IT FI000221
(43) Date of publication of application: 29.05.2002
(73) Proprietor: Advanced Microwave Engineering di Salvador Claudio e C. S.a.s., 50018 Scandicci, (prov. of Firenze) (IT)
(72) Inventor: Salvador, Claudio, 50018 Scandicci (FI) (IT); Biffi Gentili, Federico, 50141 Firenze (IT)
(74) Representative: Gervasi, Gemma

(56) References cited:
- WO-A-01/45280
- WO-A-97/24628
- DE-A- 4 422 906
- DE-A- 19 939 063
- DE-C- 19 531 219
- GB-A- 2 268 031
- US-A- 5 521 601
- US-A- 5 525 993

## Description

### Field of the invention

The invention consists of a dual band responder system, hereinafter identified with the word "transponder".

More particularly, the invention refers to a dual band transponder for data exchange between an interrogating device, also called "BOA" or "reader", and one or more responding devices, called "TAG", present within the useful radius (or "range") of the interrogating device BOA.

### Prior art

At present, transponders of known type use a radio transmission channel which may be a low frequency, a radio frequency or a microwave channel, depending on the application of the system and on the reference standards.

Among these, low frequency transponders are the most widespread because of their limited cost, but they work only at short distances (a few tens of centimetres) because they use an inductive coupling between the interrogating device BOA and the responding devices TAG.

Low frequency transponders are used prevalently for identification uses without contact. The short-distance inductive coupling allows the responding devices TAG to be energised directly through the interrogating device BOA, without using battery power supply.

Radio frequency transponders work on larger distances (up to a few metres) thanks to the coupling between the interrogating device BOA and the responding devices TAG and are used for remote identification, but the responding devices TAG require battery power supply.

Microwave transponders are the technologically most advanced application and overall they offer the best performance, being characterised by high-speed data exchange over distance of some tens of metres.

However, microwave transponders present various drawbacks which strongly limit their use, in particular the complexity and the high cost for realising the interrogating device BOA and the complex standards linked with the high power of the signal emitted by the interrogating device BOA.

Further limits of the transponder systems of the prior art are due to the nature of the communication between the interrogating device BOA and the responding device TAG, which is articulated between a state of latency in which the responding device TAG is active only when receiving the signals coming from the interrogating device BOA and a state of activity into which the responding device TAG passes when it is within the activity range of the interrogating device BOA. The mono-directional or bi-directional exchange of data between the interrogating device BOA and the responding device TAG occurs within the above activity range.

When the responding device TAG passes from latency to activity state (awakening), it is necessary that the communication occurs with high spatial discrimination so as to avoid conflicts between different responding devices TAG and to interrogate only one responding device TAG at a time.

Moreover, at the moment of the passage to the activity state, the responding device TAG concerned must have at its disposal a so long "time window" to allow the ending of the started transaction (i.e. the data exchange between the interrogating device BOA and the responding device TAG) which, depending on the application, may be mono-directional or bi-directional and more or less consistent.

A serious limit of the known transponders is therefore the fact that, by using the same transmission channel (or "layer") for activating the responding device TAG and for the communications between the responding device TAG and the interrogating device BOA and vice versa, the range of activation of the responding device TAG practically coincides with the range of communication, resulting in poor operative flexibility.

In DE 195 31 219 is disclosed a transponder system comprising an interrogating device and at least one responding device connected by a bi-directional cable-less communication system wherein said interrogating device and said responding device are provided with means for communicating through two distinct channels.

In DE 44 22 906 a similar system is disclosed consisting of an electronic key with a HF transmitter and a LF receiver/transmitter.

WO 01/45280 - relevant under Art. 54 (3) EPC - discloses a transponder system where different frequencies are used for activation and data interchange.

In GB 2 268 031 a transponder adapted to provide position data related to a vehicle, for use in conjunction with a microwave vehicle sensing apparatus, is disclosed.

In WO9724628 a portable device is disclosed which has two separate data carriers for the transfer of information functioning at different frequency ranges, low frequencies and microwave frequencies. Said portable device is characterised in that it comprises a permanently sealed unit in the form of a card.

### Scope of the invention and summary

The principal scope of the present invention is to overcome the limits of the transponder systems of the prior art.

A particular scope of the invention is to provide a transponder system where the activation radius of the responding devices TAG may be controlled independently from the communication radius (range) and at the same time where the responding device TAG requires an extremely limited energy.

### Summary of the invention.

These scopes have been achieved with a transponder system according to the enclosed claims.

### List of drawings.

The advantages obtained will be clear from the following description and from the enclosed drawings, in which:
- Fig. 1 schematically shows the coupling of an interrogating device and of a responding device according to the invention;
- Fig. 2 shows a block diagram of the transponder system realised according to the invention;
- Fig. 3 shows a circuit diagram of a responding device belonging to the claimed system.

### Detailed description of the invention

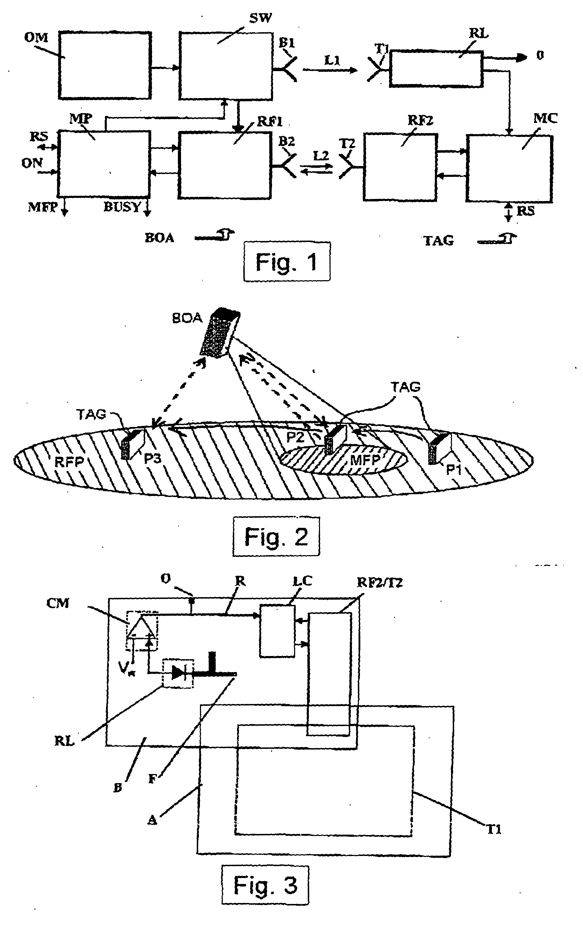

A transponder system according to the invention comprises an interrogating device BOA and at least one responding device TAG (one in figure 1) connected by a bi-directional cable-less communication system, where the interrogating device BOA and the at least one responding device TAG are provided with means for communicating through two distinct channels (L1, L2; figure 1), one of which (L1) allows the activation by the interrogating device BOA of a responding device TAG present in an activation area MFP while the other channel (L2) is bi-directional and allows the data exchange between the interrogating device BOA and a responding device TAG positioned within a data exchange area RFP.

With reference to figure 1, the interrogating device BOA and the responding device TAG communicate through two distinct, not interfering transmitting channels (L1, L2), where L1 is a microwave transmitting channel which activates the responding device TAG while L2 is a radio frequency transmitting channel for bi-directional data exchange between the interrogating device BOA and the responding device TAG.

Two antennae (B1, B2) belonging to the interrogating device BOA and two antennae (T1, T2) belonging to the responding device TAG are corresponding to the two transmitting channels (L1, L2).

The antenna B1 associated with the microwave transmitting channel L1is
characterised by a high directivity so as to obtain the desired spatial discrimination during the activation phase of the responding device TAG, while the antenna B2 corresponding to the radio frequency transmitting channel L2 is preferably an omnidirectional antenna, so as to allow a wide-range communication and without limits of reciprocal orientation between the interrogating device BOA and the responding device TAG.

The microwave activation channel L1 is a microwave signal emitted by an oscillator OM (belonging to the interrogating device BOA) by means of the antenna B1 belonging to the interrogating device BOA and received by a microwave detector RL (belonging to the responding device TAG) by means of the antenna T1 belonging to the responding device TAG.

The microwave activation signal emitted by the oscillator OM belonging to the interrogating device BOA may be variously modulated so as to avoid accidental activation by isofrequential disturbing sources or to create an information carrier.

Without diverting from the scope of the present invention, the activation signal can be a millimetric wave signal.

The data exchange channel L2 is a radio frequency signal exchanged between a transceiver RF1 (belonging to the interrogating device BOA) by means of the antenna B2 belonging to the interrogating device BOA and a transceiver RF2 (belonging to the responding device TAG) by means of the antenna T2 belonging to the responding device TAG.

In greater detail and still with reference to figure 1, an interrogating device BOA realised according to the invention comprises a microwave oscillator OM, a radio frequency transceiver RF1, a microprocessor unit MP and software SW which drives the sending of the microwave signal, manages the transceiver RF1 and can perform a number of accessory and control functions.

Preferably, the interrogating device BOA is also provided with analogical interface ports (for example a serial port RS connected to the microprocessor MP) and with logic ports for signalling, respectively, the presence of a responding device TAG in the activation area and the occupation state of the microwave transmitting channel L1 and/or of the radio frequency transmitting channel L2.

It is also possible to provide an input (not shown in figure 1) for an activation signal for "multilane" applications, which may be time division ones.

The interrogating device BOA comprises (or can comprise) at least one activation section physically separated and independent from at least one transceiver section RF but, without diverting from the scope of the present invention, the interrogating device BOA can comprise several transceiver sections RF physically separated from one another and distributed in the region around the interrogating device BOA.

The responding device TAG in turn comprises a control logic or microcontroller MC, a transceiver RF2 controlled by the microcontroller MC and a microwave detector RL connected to the microcontroller MC and apt to activate the data exchange with the interrogating device BOA.

Preferably, it is possible also to have a serial port RS or an equivalent interface.

With reference to figure 2, there are shown a interrogating device BOA, some positions of a responding device TAG and the activation (MFP) and data exchange areas (RFP) which the antennae B1 and B2 belonging to the interrogating device BOA intercept, respectively, on a horizontal reference plane along which the responding device TAG may be shifted.

The activation area MFP has an approximately elliptical shape and is enclosed within the data exchange area RFP, which is larger and approximately circular in shape.

With reference to figure 3, a possible embodiment of a dual band responding device TAG belonging to the system to which the present invention refers is shown.

The responding device TAG comprises two separated printed circuits, (A, B).

The printed circuit A is a single-side circuit comprising a planar antenna T1 with a rectangular patch which is coupled, through a slot F made on the ground plane of the circuit realised on the printed circuit B, to the circuit section of the responding device TAG.

The printed circuit B, on the side opposite to the slot F, contains the circuit section of the responding device TAG.

In detail, the circuit section of the responding device TAG realised on the printed circuit B comprises:
- an adapting network R, connected to the planar antenna T1, to which a microwave detector RL is connected;
- a control logic LC;
- the transceiver RF2 and the relevant antenna T2.

Without departing from the scope of the present invention, the responding device TAG is realised on a single printed circuit wherein the planar antenna T1 with a rectangular patch, coupled to the circuit section of the responding device TAG are realised.

The microwave detector RL comprises a microwave detecting diode connected at the output to a comparator CM which emits an activation signal for the responding device TAG when the level of the continuous voltage sent to the comparator CM by the microwave detector RL reaches a preset comparison value.

The output signal of the comparator CM is managed by the control logic LC belonging to the responding device TAG for the passage of the responding device TAG to activation status.

The logic LC also manages mono-directional or bi-directional communication on the radio frequency transmitting channel L2 by means of the transceiver RF2 and the antenna T2.

Preferably, the activation signal coming from the comparator CM may be made available to an output O for activating external circuits, if any.

Now, with reference to figure 2, the operation of the system according to the invention is described as an example.

Initially the responding device TAG is in position P1, within the area RFP covered by the antenna B2 (data exchange area) but outside the activation area MFP: in this position P1 no data exchange takes place and the responding device TAG is in a status of latency.

When the responding device TAG is within the activation area MFP of the microwave antenna B1 of the interrogating device BOA (position P2), the detecting diode of the responding device TAG receives the microwave signal coming from the interrogating device BOA and transfers it to the comparator CM.

When the level of the continuous voltage sent to the comparator CM reaches a preset comparison value, the comparator CM emits a signal which reaches the control logic LC which manages the passage of the responding device TAG to the activation status.

In the activation status the responding device TAG is able to communicate with the interrogating device BOA by using the transmitting channel RF.

When the responding device TAG replies on the transmitting channel RF the interrogating device BOA may temporarily interrupt the microwave interrogation, preventing the accidental activation of other responding devices TAG.

The microwave emission by the antenna B1 restarts at the end of a pause period of such duration to allow the ending of the interrogating device BOA-responding device TAG transaction.

Once the transaction is ended, the responding device TAG automatically goes into a latency period in which the reply to an interrogation remains inhibited. The above strategy practically allows to avoid any conflict between different responding devices TAG which are within the activation area MFP at the same time.

Preferably, the logic outputs of the interrogating device BOA, which respectively indicate the presence of a responding device TAG in the MFP area and the engaged status of the radio frequency transmitting channel L2, can be used to control access barriers or traffic lights, if any.

From the above it is clear that the system proposed presents numerous advantages, among which:
- a greater operative range, in the data exchange phase, with respect to single frequency, radio frequency or microwave systems;
- a greater immunity from fading on the communication channel, due to the use of a relatively low frequency carrier;
- simplicity and compactness of the interrogating device BOA, which may be easily realised in a portable or hand-held version, due to the use of very compact antennae;
- simplicity and reliability of the operating logic which eliminates the possibilities of conflict in the replies of different responding devices TAG;
- limited powers of emission both on the microwave transmitting channel L1 and on the radio frequency transmitting channel L2, all to the advantage of the respect of the standard limits;
- "transparent" data exchange without intermediate buffers, with speeds of up to 100 Kb a second, limited only by the RF band width, set by the LPD standard (Low Power Devices);
- easiness of interfacing the interrogating device BOA with a Personal Computer;
- the system is suitable to be used for embodiments including only one interrogating device BOA (single Lane) or several interrogating devices BOA (Multilane), without limiting the number of responding devices TAG for the identification and the data exchange.

The present invention has been described with reference to a preferred embodiment, but it is understood that equivalent modifications may be made by any skilled person without departing from the field of protection granted by the present patent.

In particular the transponder may be realised integrating antennae and circuits on a single printed circuit.

For activation, a transmitter with millimetric waves may be used instead of a microwave transmitter. The receiving section of the transponder will have therefore to be modified by using a millimetric wave diode instead of a microwave diode.

## Claims

1. Transponder system comprising:
- an interrogating device (BOA) and
- at least one responding device (TAG) connected to said interrogating device (BOA) by a bi-directional cable-less communication system, said interrogating device (BOA) and said at least one responding device (TAG) being provided with
- means for communicating through two distinct channels (L1, L2), wherein one channel (L1)serves for the activation, by the interrogating device (BOA), of a responding device (TAG) present in an activation area (MFP), and the other channel (L2), being a bi-directional channel, serves for exchanging data between the interrogating device (BOA) and a responding device (TAG) positioned within a data exchange area (RFP);
said activation channel (L1) being adapted to emit a microwave or millimetric signal by
- an oscillator (OM) belonging to the interrogating device (BOA) by means of
- a first interrogating antenna (B1) belonging to said interrogating device (BOA) and received by
- an appropriate detector (RL) belonging to the responding device (TAG), by means of
- a first responding antenna (T1) belonging to said responding device (TAG)
**characterised in that** said bidirectional channel (L2) is adapted to exchange radio frequency signal between a first transceiver (RF1) belonging to the interrogating device (BOA) by means of a second interrogating antenna (B2) belonging to said interrogating device (BOA) and a second transceiver (RF2) belonging to the responding device (TAG) by means of a second responding antenna (T2) belonging to said responding device (TAG) and said appropriate detector (RL) is adapted to activate the data exchange through said bidirectional channel (L2).

2. System according to claim 1, **characterised in that** the microwave activation signal emitted by the oscillator (OM) belonging to the interrogating device (BOA) may be variously modulated.

3. System according to claims 1 - 2, **characterised in that** the interrogating device (BOA) comprises a microprocessor unit (MP), a radio frequency transceiver (RF1), a microwave oscillator (OM) and software (SW) running on the microprocessor unit (MP) which drives the sending of the microwave signal by the microwave oscillator (OM) and manages the radio frequency transceiver (RF1).

4. System according to claim 3, **characterised in that** the interrogating device (BOA) is also provided with at least one serial port (RS) connected to the microprocessor unit (MP) and with logic ports for signalling, respectively, the presence of a responding device (TAG) in the activation area (MFP) and the engagement status of the activation channel (L1) and/or of radio frequency channel (L2).

5. System according to claim 4, **characterised in that** the interrogating device (BOA) is further provided with an input for an activation signal in applications with several interrogating devices (BOA).

6. System according to claims 1 - 5, **characterised in that** said at least one responding device (TAG) comprises at least one microcontroller (MC) connected to said radio frequency transceiver (RF2) and to said detector (RL).

7. System according to claims 1 - 6, **characterised in that** the microwave detector (RL) comprises a microwave detecting diode connected in turn at the output to a comparator (CM) which emits an activation signal for the at least one responding device (TAG) when the level of the continuous voltage sent to the comparator (CM) from microwave detector (RL) reaches a preset comparison value.

8. System according to claim 7, **characterised in that** the output signal of the comparator (CM) is managed by a control logic (LC) belonging to the at least one responding device (TAG) for the passage of the at least one responding device (TAG) to activation status.

9. System according to claims 1 - 8, **characterised in that** the at least one responding device (TAG) comprises two separated printed circuits (A, B), one of which (A) is a single-side circuit comprising a planar antenna (T1) with a rectangular patch which is coupled, through a slot (F) made on the ground plane of the second printed circuit (B), to the circuit section of the responding device (TAG), which is realised on the side of the second printed circuit (B) opposite to the slot (F).

10. System according to claim 9, **characterised in that** the circuit section of the responding device (TAG) realised on said second printed circuit board (B) comprises:
- an adapting network (R), connected to the planar antenna (T1), to which the microwave detector (RL) is connected;
- the control logic (LC);
- the transceiver (RF2) and the relevant antenna (T2).

11. System according to claims 1 - 8, **characterised in that** the at least one responding device (TAG) is realised on a single printed circuit wherein a planar antenna (T1) with a rectangular patch, coupled to the circuit section of the at least one responding device (TAG), is realised.

12. System according to claims 7 - 11, **characterised in that** an output (O) of the activation signal emitted by the comparator (CM) to control external circuits, if any, is provided.

13. System according to claims 1-12 **characterised in that** the interrogating device (BOA) comprises at least one activation section physically separated and independent from at least one transceiver section (RF).

14. System according to claim 13 **characterised in that** the interrogating device (BOA) comprises several transceiver sections (RF), physically separated from one another and distributed in the region around the interrogating device (BOA).

## Patentansprüche

1. Transpondersystem, welches umfasst:
- ein Abfragegerät (BOA) und
- mindestens ein Antwortgerät (TAG), welches mit dem genannten Abfragegerät (BOA) durch ein in beiden Richtungen arbeitendes drahtloses Kommunikationssystem verbunden ist, wobei das genannte Abfragegerät (BOA) und das genannte mindestens eine Antwortgerät (/TAG) ausgestattet sind mit
- Mitteln zur Kommunikation über zwei unterschiedliche Kanäle (L1, L2), von denen ein Kanal (L1) zur Aktivierung eines in einem Aktivierungsgebiet (MFP) vorhandenen Antwortgerätes (TAG) durch das Abfragegerät (BOA) dient und der andere Kanal (L2), welcher ein in beiden Richtungen arbeitender Kanal ist, zum Austausch von Daten zwischen dem Abfragegerät (BOA) und einem sich innerhalb eines Datenaustauschgebiets (RFP) befindlichen Antwortgerät (TAG) dient,
wobei der genannte Aktivierungskanal (L1) dergestalt ausgelegt ist, dass im Mikrowellenbereich oder im Millimeterwellenbereich
- ein zum Abfragegerät (BOA) gehörender Oszillator (OM) ein Signal abstrahlt mit Hilfe
- einer ersten Abfrageantenne (B1), welche zum genannten Abfragegerät (BOA) gehört, und dieses Signal empfangen wird durch
- einen geeigneten und zum Antwortgerät (TAG) gehörenden Detektor (RL) mit Hilfe
- einer ersten Antwortantenne (T1), die zu dem genannten Antwortgerät (TAG) gehört,
**dadurch gekennzeichnet, dass** der genannte, in beiden Richtungen arbeitende Kanal (L2) dergestalt ausgelegt ist, dass über ihn der Austausch eines Funkfrequenzsignals zwischen einem zum Abfragegerät (BOA) gehörenden ersten Transceiver (RF1) mit Hilfe einer zum genannten Abfragegerät (BOA) gehörenden zweiten Abfrageantenne (B2) und einem zum Antwortgerät (TAG) gehörenden zweiten Transceiver (RF2) mit Hilfe einer zum genannten Antwortgerät (TAG) gehörenden zweiten Antwortantenne (T2) erfolgt, und **dadurch**, dass der genannte geeignete Detektor (RL) dergestalt ausgelegt ist, dass er den Datenaustausch über den genannten, in beiden Richtungen arbeitenden Kanal (L2) aktiviert.

2. System nach Anspruch 1, **dadurch gekennzeichnet, dass** das von dem zum Abfragegerät (BOA) gehörenden Oszillator (OM) abgegebene Mikrowellen-Aktivierungssignal auf verschiedene Weise moduliert sein kann.

3. System nach den Ansprüchen 1 - 2, **dadurch gekennzeichnet, dass** das Abfragegerät (BOA) umfasst: eine Mikroprozessoreneinheit (MP), einen Funkfrequenz-Transceiver (RF1), einen Mikrowellenoszillator (OM) und eine auf der Mikroprozessoreneinheit (MP) laufende Software (SW), welche das Senden des vom Mikrowellenoszillator (OM) kommenden Mikrowellensignals ansteuert und den Funkfrequenz-Transceiver (RF1) verwaltet.

4. System nach Anspruch 3, **dadurch gekennzeichnet, dass** das Abfragegerät (BOA) auch mit mindestens einem seriellen Port (RS) ausgestattet ist, welcher mit der Mikroprozessoreneinheit (MP) verbunden ist, bzw. mit Logikports zur Erkennung des Vorhandenseins eines Antwortgerätes (TAG) im Aktivierungsgebiet (MFP) und des Einschaltzustandes des Aktivierungskanals (L1) und/oder des Funkfrequenzkanals (L2).

5. System nach Anspruch 4, **dadurch gekennzeichnet, dass** das Abfragegerät (BOA) bei Anwendungen mit mehreren Abfragegeräten (BOA) ferner mit einem Eingang für ein Aktivierungssignal ausgestattet ist.

6. System nach den Ansprüchen 1 - 5, **dadurch gekennzeichnet, dass** das mindestens eine Antwortgerät (TAG) mindestens einen Mikrocontroller (MC) umfasst, welcher mit dem genannten Funkfrequenz-Transceiver (RF2) und mit dem genannten Detektor (RL) verbunden ist.

7. System nach den Ansprüchen 1 - 6, **dadurch gekennzeichnet, dass** der Mikrowellendetektor (RL) eine Diode zum Mikrowellennachweis umfasst, welche ihrerseits mit ihrem Ausgang an einen Komparator (CM) angeschlossen ist, welcher ein Aktivierungssignal für das mindestens eine Antwortgerät (TAG) abgibt, wenn der Wert der Gleichspannung, die vom Mikrowellendetektor (RL) an den Komparator (CM) gegeben wird, einen vorher eingestellten Vergleichswert erreicht.

8. System nach Anspruch 7, **dadurch gekennzeichnet, dass** das Ausgangssignal des Komparators (CM) von einer zu dem mindestens einen Antwortgerät (TAG) gehörenden Steuerlogik (LC) verwaltet wird, um das mindestens eine Antwortgerät (TAG) in den aktivierten Zustand zu überführen.

9. System nach den Ansprüchen 1-8, **dadurch gekennzeichnet, dass** das mindestens eine Antwortgerät (TAG) zwei getrennte gedruckte Leiterplatten (A, B) umfasst, von denen eine (A) eine einseitig kaschierte Leiterplatte ist, welche eine Flachantenne (T1) mit einem Rechteckfeld umfasst, welche über einen Schlitz (F), der auf der Masseplatte der zweiten gedruckten Leiterplatte (B) angelegt ist, mit dem Schaltungsabschnitt des Antwortgerätes (TAG) gekoppelt ist, welcher auf der Seite der zweiten gedruckten Leiterplatte (B) gegenüber dem Schlitz (F) ausgeführt ist.

10. System nach Anspruch 9, **dadurch gekennzeichnet, dass** der Schaltungsabschnitt des Antwortgerätes (TAG), welcher auf der genannten zweiten gedruckten Leiterplatte (B) ausgeführt ist, umfasst:
- ein Anpassungsnetzwerk (R), welches an die Flachantenne (T1) angeschlossen ist, mit welcher der Mikrowellendetektor (RL) verbunden ist;
- die Steuerlogik (LC);
- den Transceiver (RF2) und die zugehörige Antenne (T2).

11. System nach den Ansprüchen 1 - 8, **dadurch gekennzeichnet, dass** das mindestens eine Antwortgerät (TAG) auf einer einzigen gedruckten Leiterplatte ausgeführt ist, auf welcher eine Flachantenne (T1) mit einem Rechteckfeld, welche an den Schaltungsabschnitt des mindestens einen Antwortgerätes (TAG) angekoppelt ist, ausgeführt ist.

12. System nach den Ansprüchen 7 - 11, **dadurch gekennzeichnet, dass** für das Aktivierungssignal, welches vom Komparator (CM) abgegeben wird, ein Ausgang (O) vorhanden ist, um äußere Schaltungen, falls solche vorhanden sind, zu steuern.

13. System nach den Ansprüchen 1 - 12, **dadurch gekennzeichnet, dass** das Abfragegerät (BOA) mindestens einen Aktivierungsabschnitt umfasst, welcher von dem mindestens einen Transceiverabschnitt (RF) körperlich getrennt und von diesem unabhängig ist.

14. System nach Anspruch 13, **dadurch gekennzeichnet, dass** das Abfragegerät (BOA) mehrere Transceiverabschnitte (RF) umfasst, die voneinander körperlich getrennt sind und sich in dem Gebiet um das Abfragegerät (BOA) verteilt befinden.

## Revendications

1. Système de transpondeur comprenant :
- un dispositif interrogateur (BOA), et
- au moins un dispositif répondeur (TAG) connecté audit dispositif interrogateur (BOA) par un système de communication bidirectionnel sans fil, ledit dispositif interrogateur (BOA) et ledit au moins un dispositif répondeur (TAG) étant pourvus
- de moyens pour communiquer sur deux canaux distincts (L1, L2), parmi lesquels l'un des canaux (L1) sert à l'activation - par le dispositif interrogateur (BOA) - d'un dispositif répondeur (TAG) présent dans une zone d'activation (MFP), et l'autre canal (L2) - qui est un canal bidirectionnel
- sert à l'échange de données entre le dispositif interrogateur (BOA) et un dispositif répondeur (TAG) placé à l'intérieur d'une zone d'échange de données (RFP) ;
ledit canal d'activation (L1) étant adapté pour émettre un signal hyperfréquences, ou un signal millimétrique, par :
- un oscillateur (OM) appartenant au dispositif interrogateur (BOA), au moyen
- d'une première antenne interrogatrice (B1) appartenant audit dispositif interrogateur (BOA) et reçu par :
- un détecteur approprié (RL) appartenant au dispositif répondeur (TAG), au moyen
- d'une première antenne répondeuse (T1) appartenant audit dispositif répondeur (TAG),
**caractérisé en ce que** ledit canal bidirectionnel (L2) est adapté pour échanger un signal radiofréquence entre un premier appareil émetteur / récepteur (RF1) appartenant au dispositif interrogateur (BOA) au moyen d'une deuxième antenne interrogatrice (B2) appartenant audit dispositif interrogateur (BOA) et un deuxième appareil émetteur / récepteur (RF2) appartenant au dispositif répondeur (TAG) au moyen d'une deuxième antenne répondeuse (T2) appartenant audit dispositif répondeur (TAG)
et ledit détecteur approprié (RL) est adapté pour activer l'échange de données sur ledit canal bidirectionnel (L2).

2. Système selon la revendication 1, **caractérisé en ce que** le signal d'activation hyperfréquences émis par l'oscillateur (OM) appartenant au dispositif interrogateur (BOA) peut être amené à moduler de manière variable.

3. Système selon les revendications 1 à 2, **caractérisé en ce que** le dispositif interrogateur (BOA) comprend une unité microprocesseur (MP), un appareil émetteur / récepteur radiofréquence (RF1), un oscillateur hyperfréquence (OM), et un programme informatique (SW) - exécuté sur l'unité microprocesseur (MP) - qui commande l'envoi du signal hyperfréquences par l'oscillateur hyperfréquence (OM) et qui prend en charge l'appareil émetteur / récepteur radiofréquence (RF1).

4. Système selon la revendication 3, **caractérisé en ce que** le dispositif interrogateur (BOA) est également pourvu d'au moins un port série (RS) connecté à l'unité microprocesseur (MP) et de ports logiques pour signaler, respectivement, la présence d'un dispositif répondeur (TAG) dans la zone d'activation (MFP) et le statut d'engagement du canal d'activation (L1) et / ou du canal radiofréquence (L2).

5. Système selon la revendication 4, **caractérisé en ce que** le dispositif interrogateur (BOA) est pourvu par ailleurs d'une entrée pour un signal d'activation dans des applications avec une pluralité de dispositifs interrogateurs (BOA).

6. Système selon les revendications 1 à 5, **caractérisé en ce que** ledit au moins un dispositif répondeur (TAG) comprend au moins un microcontrôleur (MC) connecté au dit appareil émetteur / récepteur radiofréquence (RF2) et audit détecteur (RL).

7. Système selon les revendications 1 à 6, **caractérisé en ce que** le détecteur hyperfréquences (RL) comprend une diode de détection de signaux hyperfréquences qui est connectée à son tour, au niveau de sa sortie, à un comparateur (CM) qui émet un signal d'activation pour ledit au moins un dispositif répondeur (TAG) quand le niveau de la tension continue qui est envoyée vers le comparateur (CM) à partir du détecteur hyperfréquences (RL) atteint une valeur de comparaison préalablement définie.

8. Système selon la revendication 7, **caractérisé en ce que** le signal de sortie du comparateur (CM) est pris en charge par une logique de commande (LC) appartenant audit au moins un dispositif répondeur (TAG) pour le passage dudit au moins un dispositif répondeur (TAG) au statut d'activation.

9. Système selon les revendications 1 à 8, **caractérisé en ce que** ledit au moins un dispositif répondeur (TAG) comprend deux circuits imprimés séparés (A, B), dont l'un (A) est un circuit à un seul côté comprenant une antenne planaire (T1) munie d'une plaque rectangulaire qui est couplée, par le biais d'une fente (F) réalisée sur le plan de sol du second circuit imprimé (B), à la section de circuit du dispositif répondeur (TAG) qui est réalisée sur le côté du second circuit imprimé (B) à l'opposé de la fente (F).

10. Système selon la revendication 9, **caractérisé en ce que** la section de circuit du dispositif répondeur (TAG) qui est réalisée sur ledit seconde carte à circuit imprimé (B) comprend :
- un réseau adaptatif (R) connecté à l'antenne planaire (T1), auquel est connecté le détecteur hyperfréquences (RL) ;
- la logique de commande (LC) ;
- l'appareil émetteur / récepteur (RF2) et l'antenne correspondante (T2).

11. Système selon les revendications 1 à 8, **caractérisé en ce que** ledit au moins un dispositif répondeur (TAG) est réalisé sur un circuit imprimé unique, dans lequel une antenne planaire (T1) munie d'une plaque rectangulaire couplée à la section de circuit dudit au moins un dispositif répondeur (TAG), est réalisée.

12. Système selon les revendications 7 à 11, **caractérisé en ce qu'**une sortie (O) du signal d'activation émis par le comparateur (CM) vers des circuits de commande externes - le cas échéant - est fournie.

13. Système selon les revendications 1 à 12, **caractérisé en ce que** le dispositif interrogateur (BOA) comprend au moins une section d'activation séparée physiquement et indépendante d'au moins une section de l'appareil émetteur / récepteur (RF).

14. Système selon la revendication 13, **caractérisé en ce que** le dispositif interrogateur (BOA) comprend une pluralité de sections d'appareil émetteur / récepteur (RF), qui sont séparées physiquement les unes des autres et qui sont réparties dans la région autour du dispositif interrogateur (BOA).
